# EUROPEAN PATENT SPECIFICATION

(11) **EP 3 065 915 B1**
(45) Date of publication and mention of the grant of the patent: **06.09.2017**
(21) Application number: 13792297.7
(22) Date of filing: 08.11.2013
(51) Int. Cl.: B25G 1/04, F16B 7/04

(54) **COUPLING APPARATUS FOR TELESCOPING TUBES**
KOPPLUNGSVORRICHTUNG FÜR TELESKOPROHRE
APPAREIL D'ACCOUPLEMENT POUR TUBES TÉLESCOPIQUES

(43) Date of publication of application: 14.09.2016
(73) Proprietor: Husqvarna AB, 56182 Huskvarna (SE)
(72) Inventor: KOHL, Peter, 89257 Illertissen (DE)
(74) Representative: Finkele, Rolf
(86) International application number: PCT/EP2013/073402
(87) International publication number: WO 2015/067317

(56) References cited:
- EP-A1- 1 523 920
- DE-A1- 3 625 287
- GB-A- 2 413 518

## Description

### TECHNICAL FIELD

The present invention relates to a coupling apparatus, and more particularly to a coupling apparatus for telescoping tubes.

### BACKGROUND

Extension handles incorporating telescoping tubes are well known in the art. Such an extension handle may typically include an inner tube and an outer tube, the inner tube being telescopically slidable within the outer tube. A coupling may telescopically lock the inner tube and the outer tube relative to each other. To adjust a length of the extension handle, the coupling may be actuated to enable the inner tube and the outer tube to slide relative to one other.

US Patent 5,228,202 (the '202 patent) granted on July 20, 1993 discloses an extension handle for a tree pruner including a connecting socket forming an outer sleeve that is spring biased and is movable against an inner sleeve retained inside the outer sleeve to hold a handle tube and a shear holder tube. The inner sleeve includes an inward flange to stop the handle tube and a plurality of raised portions adjacent to the bottom end thereof engaged into respective recessed holes on the handle tube to hold the handle tube in place. The inner sleeve further includes plurality of steel balls in respective recessed holes adjacent to the top end thereof engaged into respective recessed holes on the shear holder tube to hold the shear holder tube. A constraining ring is mounted on a top flange on the outer sleeve and retained in place by hooks to constrain the steel balls inside the respective recessed holes on the inner sleeve.

**A similar coupling mechanism is also known from** DE 36 25 287 A1 **that descibes a telescopic pole arrangment with a spring biased coupling apparatus. Instead of using separate steel balls to engage with recesses in the inner tube to lock it against the outer tube an elastic plastics member is integrally formed with the inner sleeve exhibiting a protrusion cooperating with the inner tube's recesses.**

To adjust the extension handle, the outer sleeve is pushed downwards along the handle tube. The inner sleeve then extends out of the outer sleeve. The steel balls disengage from the respective recessed holes on the shear holder tube but are constrained inside the recessed holes of the inner sleeve by the constraining ring. The shear holder tube can be then inserted into the inner sleeve. Releasing the outer sleeve causes it to move upwards, due to spring biasing, from the inner sleeve, and further causes the steel balls to engage into the recessed holes on the shear holder tube. The outer sleeve moves upwards due to spring biasing to lock the shear holder tube and the handle tube to each other.

### SUMMARY

It is an objective of the present invention to provide an improved coupling apparatus for telescopic tubes. The objective is at least partially achieved according to a coupling apparatus for coupling an inner tube and an outer tube, the inner tube being telescopically received within the outer tube. The coupling apparatus includes an adapter at least partly enclosing the inner tube and the outer tube, the adapter including a first end, a second end and at least one recessed portion. The first end receives the inner tube and the second end receives the outer tube. Further, the adapter is coupled to the outer tube. A locking member is received within the at least one recessed portion of the adapter, the locking member being configured to detachably engage with the inner tube to lock the inner tube and outer tube relative to each other. A sleeve at least partly encloses the adapter, the sleeve including a first end, a second end and a retaining portion. The retaining portion is configured to detachably engage with the locking member to keep the locking member engaged with the inner tube. A first constraining member is disposed on the adapter, the first constraining members being engaged with the first end of the sleeve. Further, a second constraining member is disposed on the adapter, the second constraining member being engaged with the second end of the sleeve. The first and the second constraining members are spring biased such that the retaining portion of the sleeve detachably engages with the locking member. Further, the sleeve is slidable towards the first or the second ends of the adapter against the spring biasing of the first and the second constraining members such that the retaining portion of the sleeve disengages from the locking member and the locking member disengages from the inner tube to allow the inner tube and the outer tube to telescopically slide relative to each other. The coupling apparatus may be ergonomic since the inner tube may be telescopically moved both into and out of the outer tube, by sliding the sleeve either towards the first or the second ends of the adapter. Thus, based on user preferences, the sleeve may be slid towards the first end of the adapter and the inner tube moved into the outer tube. Since the direction of movement of the inner tube may be substantially opposite to the sliding direction of the sleeve, the operation may be intuitive and ergonomic for the user. Similarly, based on user preferences, the sleeve may be slid towards the second end of the adapter and the inner tube moved out of the outer tube. Since the direction of movement of the inner tube may be substantially opposite to the sliding direction of the sleeve, the operation may be intuitive and ergonomic for the user.

In an embodiment, the adapter includes two recessed portions, each recessed portion being configured to receive one locking member. In a further embodiment, the locking member includes a main portion and a protruding portion, the main portion being configured to detachably engage with the retaining portion of the sleeve and the protruding portion being configured to detachably engage with a locking recess of the inner tube. In another embodiment, the main portion is a substantially annular segment. In an alternate embodiment, the locking member comprises a ball.

In an embodiment, the sleeve further includes at least one wide portion, a width of the at least one wide portion being more than a width of the retaining portion. In another embodiment, the sleeve further includes at least one inclined portion, the at least one inclined portion being disposed between the at least one wide portion and the retaining portion. The at least one inclined portion of the sleeve may facilitate sliding of the sleeve relative to the locking member. Further, the at least one inclined portion may cooperate with the locking member to retain the sleeve in an unlocked configuration against the spring biasing of the first and the second constraining members.

In an embodiment, the sleeve further includes at least one end projection at each of the first and the second ends. Each of the first and the second constraining members includes at least one constraining projection, the at least one end projection at each of the first and second ends of the sleeve being configured to engage with the at least one constraining projection of each of the first and the second constraining members. In another embodiment, each of the first and the second constraining members further includes at least one stop projection, the at least one stop projection being axially spaced relative to the at least one constraining projection. In yet another embodiment, the at least one constraining projection and the at least one stop projection are substantially annular segments. The stop projections may prevent the sleeve from inadvertently disengaging from the first and/or second contraining members.

In an embodiment, the coupling apparatus further includes a first spring member and a second spring member, the first spring member being disposed between a first projecting portion of the adapter and the first constraining member, and the second spring member being disposed between a second projecting portion of the adapter and the second constraining member.

In an embodiment, the inner tube includes a plurality of locking recesses spaced along a longitudinal axis. Further, a plurality of tube indicators is spaced along the longitudinal axis, each of the plurality of tube indicators corresponding to one of the plurality of locking recesses. Moreover, an axial distance along the longitudinal axis between one of the plurality of locking recesses and the corresponding tube indicator is substantially equal to the distance along the longitudinal axis between the first end of the adapter and the recessed portion of the adapter.
In another embodiment, an angular position of each of the tube indicators, on an outer surface of the inner tube, is substantially similar to an angular position of the corresponding locking recess on the outer surface of the inner tube.
In yet another embodiment, the adapter includes a reference indicator proximate to the first end of the adapter. The reference indicator is located at an angular position, on an outer surface of the adapter, substantially similar to an angular position of the tube indicators.

In various embodiments, a hand-held tool includes the coupling apparatus. Further, the inner tube and the outer tube are part of an extension handle of a hand-held tool.

### BRIEF DESCRIPTION OF THE DRAWINGS

The invention will be described in more detail with reference to the enclosed drawings, wherein:
FIG. **1** illustrates a partially assembled view of a coupling apparatus, according to an embodiment of the present invention;
FIG. **2** illustrates an assembled view of the coupling apparatus, according to the embodiment of FIG. **1****;**
FIG. **3** illustrates a sectional view of the coupling apparatus, according to an embodiment of the present invention;
FIG. **4A** illustrates a side view of the coupling apparatus in a locked configuration, according to an embodiment of the present invention;
FIG. **4B** illustrates a sectional view of the coupling apparatus in the locked configuration, according to the embodiment of FIG. **4A****;**
FIG. **5A** illustrates a sectional view of the coupling apparatus with an inner tube in an initial position and the coupling apparatus in a second unlocked configuration, according to an embodiment of the present invention;
FIG. **5B** illustrates a sectional view of the coupling apparatus with the inner tube telescopically displaced from the initial position in FIG. **5A****.**
FIG. **6A** illustrates a side view of the coupling apparatus in a first unlocked configuration, according to an embodiment of the present invention;
FIG. **6B** illustrates a sectional view of the coupling apparatus in the first unlocked configuration, according to the embodiment of FIG. **6A****;**
FIG. **7A** illustrates a side view of the coupling apparatus in a second unlocked configuration, according to an embodiment of the present invention;
FIG. **7B** illustrates a sectional view of the coupling apparatus in the second unlocked configuration, according to the embodiment of FIG. **7A****;** and
FIGS. **8A** and **8B** illustrate side views of the coupling apparatus having one or more tube indicators and a reference indicator, according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "lateral", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

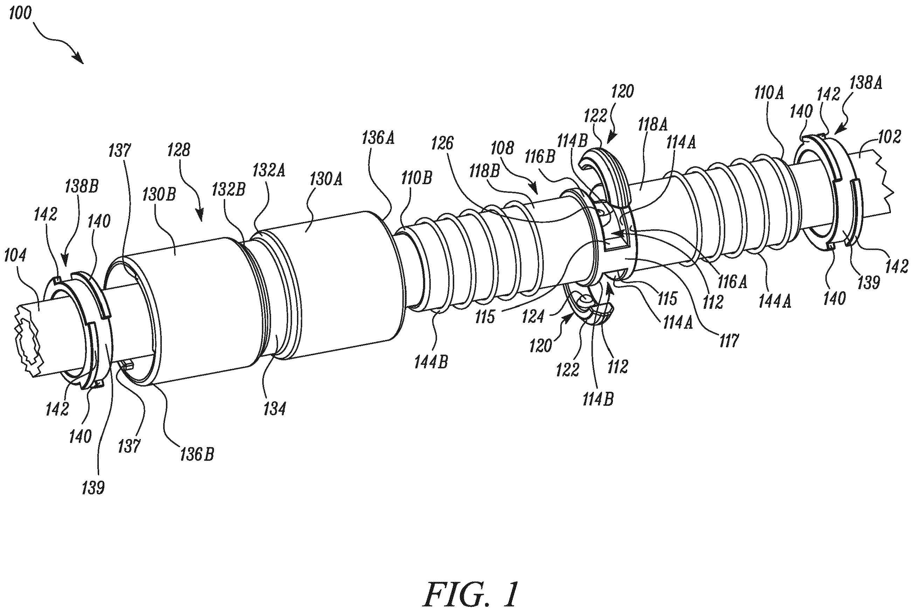

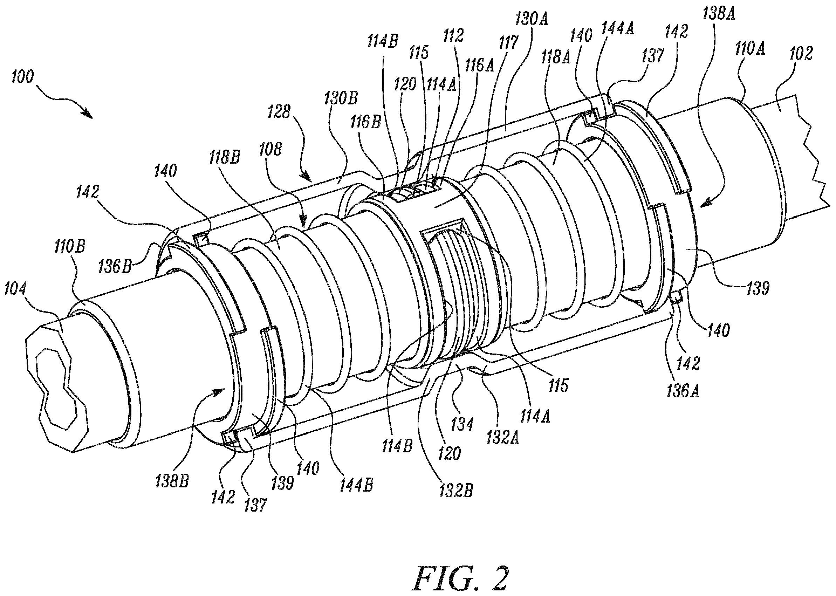

FIGS. **1** and **2** illustrate a partially assembled view and a fully assembled view, respectively, of a coupling apparatus **100,** according to an embodiment of the present invention. The coupling apparatus **100** couples an inner tube **102** and an outer tube **104.** In an embodiment, the inner tube **102** may be telescopically received within the outer tube **104.** Further, the inner tube **102** and the outer tube **104** may be substantially cylindrical tubes. Further, the inner tube **102** and the outer tube **104** may be part of an extension handle of a hand-held tool (not shown). The hand-held tool may be, for example, but not limited to, an extension lopper, a pruner, a handsaw, or the like.

As illustrated in FIGS. **1** and **2****,** the coupling apparatus **100** includes an adapter **108** having a first end **110A** and a second end **110B.** The first end **110A** receives the inner tube **102,** while the second end **110B** receives the outer tube **104.** In an embodiment, the adapter **108** may be coupled to the outer tube **104.** The outer tube **104** may be coupled to the adapter **108** by press fitting, adhesives, welding, fasteners, or the like. Further, the adapter **108** includes two recessed portions **112.** In an embodiment, each recessed portion **112** is delimited by a first curved wall **114A,** a second curved wall **114B** and two straight walls **115.** The first and the second curved walls **114A, 114B** may retain each of the locking members **120** longitudinally. Further, the straight walls **115** may retain each of the locking members **120** circumferentially. The first and the second curved walls **114A, 114B** may be of parts of a first projecting portion **116A** and a second projecting portion **116B,** respectively. Further, the straight walls **115** may be part of partitions **117** (only one shown in FIGS. **1** and **2**) that may be connected to the first and the second projecting portions **116A, 116B,** thereby separating the two recessed portions **112.** In an embodiment, the first and the second projecting portions **116A, 116B** may project radially outwards from outer surfaces of a first portion **118A** and a second portion **118B,** respectively, of the adapter **108.** As illustrated in FIGS. **1** and **2****,** the first and the second portions **118A, 118B** may be proximal to the first and the second ends **110A, 110B,** respectively, of the adapter **108.** In an embodiment, the first and the second portions **118A, 118B** may be substantially cylindrical. Further, the first and the second projecting portions **116A, 116B** may be substantially annular.

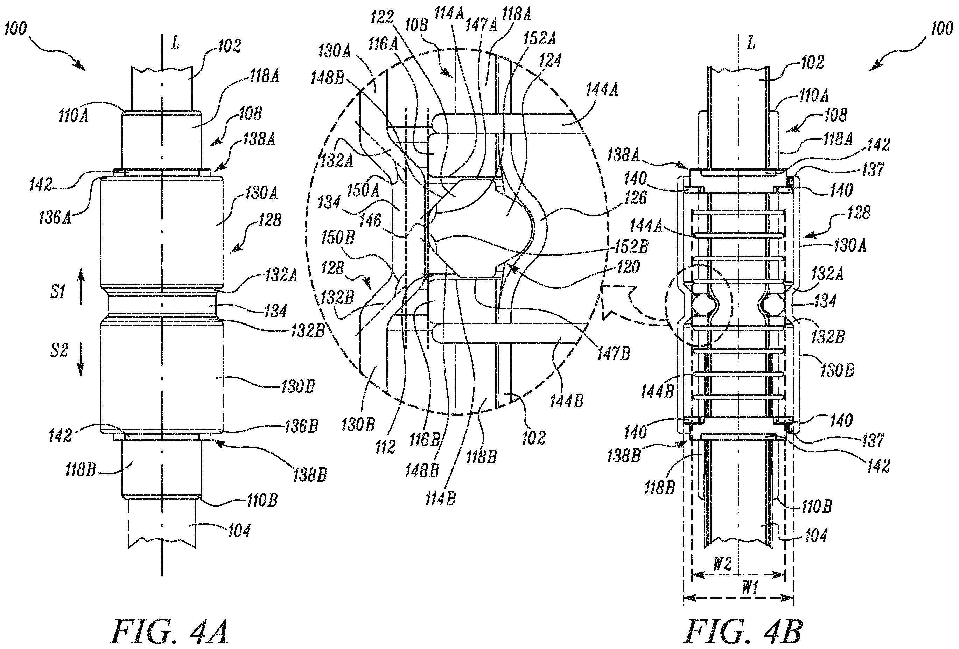

In an embodiment, locking members **120** are received in each of the recessed portions **112.** Each locking member **120** includes a main portion **122** and a protruding portion **124.** In an embodiment, the main portion **122** is a substantially annular segment. The protruding portion **124** may detachably engage with a locking recess **126** of the inner tube **102.** Further, in an embodiment, the sleeve **128** at least partly encloses the adapter **108.** The sleeve **128** includes a first wide portion **130A,** a first inclined portion **132A,** a retaining portion **134,** a second inclined portion **132B,** and a second wide portion **130B.** In an embodiment, a width (shown in FIG. **4B**) of each of the first or the second wide portions **130A, 130B** is more than a width (shown in FIG. **4B**) of the retaining portion **134.** Further, the first inclined portion **132A** is disposed between the first wide portion **130A** and the retaining portion **134;** while the second inclined portion **132B** is disposed between the second wide portion **130B** and the retaining portion **134.** The first wide portion **130A** and the second wide portion **130B** include a first end **136A** and a second end **136B,** respectively. The first and the second ends **136A, 136B** of the sleeve **128** are proximate to the first and the second ends **110A, 110B,** respectively, of the adapter **108.** Moreover, the sleeve **128** includes two end projections **137** at each of the first and the second ends **136A, 136B.** The end projections **137** may extend radially inwards from the first and the second ends **136A, 136B.** In an embodiment, each end projection **137** may be annular segments extending over an angular range of approximately 90 degrees.

In an embodiment, a first constraining member **138A** and a second constraining member **138B** are disposed on the outer surfaces of the first and the second portions **118A, 118B,** respectively, of the adapter **108.** Each of the first and the second constraining members **138A, 138B** includes a base portion **139,** two constraining projections **140** and two stop projections **142.** In an embodiment, the stop projections **142** are axially spaced relative to the constraining projections **140.** The constraining projections **140** and the stop projections **142** may extend radially outwards from the base portion **139.** The base portion **139** may be substantially ring shaped. In an embodiment, the constraining projections **140** and the stop projections **142** are annular segments. Further, each of the constraining projections **140** and the stop projections **142** may extend over an angular range of approximately 90 degrees. Moreover, each of the constraining projections **140** and the stop projections **142** may be angularly offset relative to each other such that only one of the constraining projections **140** and the stop projections **142** may be provided at each 90 degree sector of the base portion **139.** In an embodiment, each of the constraining projections **140** engages with the corresponding end projection **137** of the sleeve **128.** Each constraining projection **140** may be substantially aligned with the corresponding constraining end projection **137** when engaged. Further, a circumferential length of each constraining may be substantially equal to a circumferential length of each end projection **137.** Thus, the first and the second constraining members **138A, 138B** may engage with the first and the second ends **136A, 136B,** respectively, of the sleeve **128.** The engagement of the constraining projections **140** and the corresponding end projections **137** may ensure that the sleeve **128,** the first constraining member **138A,** and the second constraining member **138B** may be axially displaced together.

In an embodiment, a first spring member **144A** is disposed between the first projecting portion **116A** and the first constraining member **138A.** Ends of the first spring member **144A** may be connected to the first projecting portion **116A** and the first constraining member **138A.** Further, a second spring member **144B** is disposed between the second projecting portion **116B** and the second constraining member **138B.** Ends of the second spring member **144B** may be connected to the second projecting portion **116B** and the second constraining member **138B.** The first and the second spring members **144A, 144B** may be coil springs. However, the first and/or the second spring members **144A, 144B** may be any resilient components known in the art, for example, a rubber member, a spring washer, or the like. The first and the second spring members **144A, 144B** may spring bias the first and second constraining members **138A, 138B,** respectively, such that the retaining portion **134** of the sleeve **128** detachably engages with the locking members **120.**

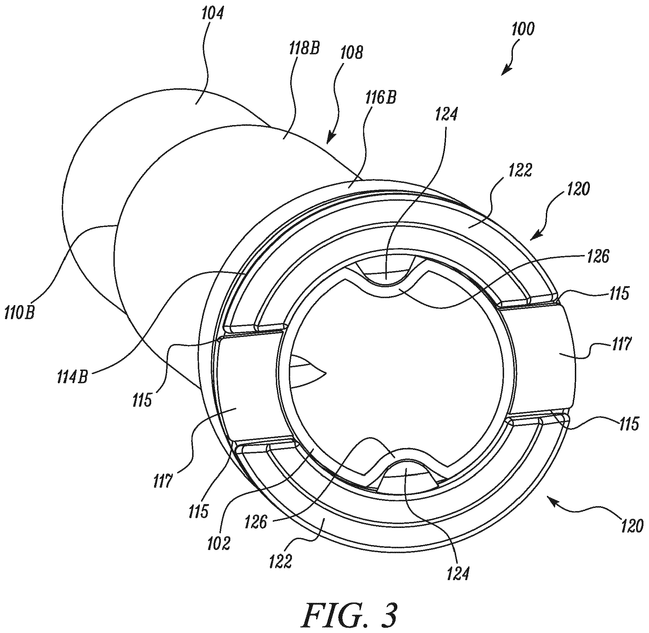

FIG. **3** illustrates a sectional view of the coupling apparatus with various components removed. As illustrated in FIG. **3****,** each of the protruding portions **124** detachably engages with the corresponding locking recess **126** of the inner tube **102.** Shapes of the protruding portion **124** and the locking recesses **126** may be substantially complementary to each other. Engagement of each protruding portion **124** with the corresponding locking recess **126** may substantially prevent telescoping movement of the inner tube **102** relative to the outer tube **104.** Further, rotation of the inner tube **102** relative to the adapter **108** and hence, the outer tube **104** may also be substantially prevented. In an alternate embodiment, each locking member **120** may be a ball (not shown). The locking recesses **126** of the inner tube and/or the recessed portions of the adapter **108** may then have shapes conforming to the balls.

In an embodiment, the inner tube **102** may contain multiple sets of the locking recesses **126,** each set containing the two circumferentially spaced locking recesses **126** at a particular longitudinal position (as illustrated in FIG. **3**). Further, the sets of the locking recesses **126** may be spaced longitudinally along a length of the inner tube **102.** A distance between any adjacent sets of the locking recesses **126** may be equal.

The coupling apparatus **100,** the inner tube **102** and the outer tube **104,** as illustrated in FIGS. **1-3****,** is exemplary in nature, and the coupling apparatus **100** may be of any alternate configuration within the scope of the present invention. For example, the inner tube **102** and the outer tube **104** may have cross-section other than substantially circular, for example, elliptical, polygonal, oval, or the like. Cross-sections of various portions of the adapter **108,** sleeve **128,** the locking members **120,** the first constraining member **138A** and the second constraining member **138B** may be of different shapes to conform to the shapes of the inner tube **102** and the outer tube **104.** Further, a number of locking recesses **126** at a longitudinal position may be any number other than two, for example, one, three etc. Similarly, the adapter **108** may include a corresponding number of the recessed portions **112.** A corresponding number of the locking members **120** may therefore be present. Further, the sleeve **128** includes any number of the end projections **137** other than two, for example, one, three etc. Similarly, the first and the second constraining members **138A, 138B** may include any number of the constraining projections **140** and/or the stop projections **142** other than two. Angular ranges of the end projections **135,** the constraining projections **140** and/or the stop projections **142** may be different from approximately 90 degrees. Various configurations of the coupling apparatus **100** will be described henceforth.

FIGS. **4A** and **4B** illustrate the coupling apparatus **100** in a locked configuration, according to an embodiment of the present invention. In the locked configuration, the first and the second spring members **144A, 144B** spring bias the first and the second constraining members **138A, 138B** such that the retaining portion **134** of the sleeve **128** may detachably engage with the locking members **120.**

Further, the main portion **122** of each of the locking members **120** includes a horizontal surface **146,** a first vertical surface **147A,** a second vertical surface **147B,** a first slanted surface **148A** and a second slanted surface **148B.** In an embodiment, a fillet or a chamfer may be provided between each of the first and the second inclined portions **132A, 132B** and the horizontal surface **146.** In the locked configuration, the retaining portion **134** of the sleeve **128** may detachably engage with the horizontal surface **146.** Further, the first and the second vertical surfaces **147A, 147B** may abut the first and the second curved walls **114A, 114B,** respectively. The retaining portion **134** may force that the locking members **120** inside the recessed portion **112.** Consequently, the protruding portions **124** of the locking members **120** detachably engage with the locking recesses **126** of the inner tube **102.** Thus, the inner tube **102** may be telescopically locked relative to the outer tube **104.** Further, the first and the second slanted surfaces **148A, 148B** may be proximate to the first and the second inclined portions **132A, 132B,** respectively. The sleeve **128** may be slid in a first sliding direction **S1** or a second sliding direction **S2,** as will be explained in detail later.

In an embodiment, the horizontal surface **146** may be substantially concentric with the retaining portion **134.** In another embodiment, an angle **150A** between the first inclined portion **132A** and the retaining portion **134** may lie substantially in a range from about 40 degrees to 50 degrees. Moreover, an angle **150B** between the second inclined portion **132B** and the retaining portion **134** may be substantially equal to the angle **150A.** In an embodiment, an angle **152A** between the first slanted surface **148A** and the horizontal surface **146** may be substantially equal to the angle **150A.** Similarly, an angle **152B** between the second slanted surface **148B** and the horizontal surface **146** may be substantially equal to the angle **150A.**

In an embodiment, the width **W1** of each of the first or the second wide portions **130A, 130B** may be more than a width **W2** of the retaining portion **134.** The width **W1** may be equal to an inner diameter of each of the first or the second wide portions **130A, 130B.** Similarly, the width **W2** may be equal to an inner diameter of the retaining portion **134.** In a further embodiment, the width **W1** may lie substantially in a range from about 42 mm to 47mm. Moreover, the width **W2** may lie substantially in a range from about 35 mm to 40mm. The difference between **W1** and **W2** may be about 6 to 8 mm and preferably 7 mm.

The various details of the sleeve **128** and the locking members **120,** as described above, are purely exemplary in nature, and the sleeve **128** and the locking members **120** may be of any alternate configuration within the scope of the invention. For example, the angles **150A** and **150B** may be unequal. Similarly, the angles **152A** and **152B** may be unequal.

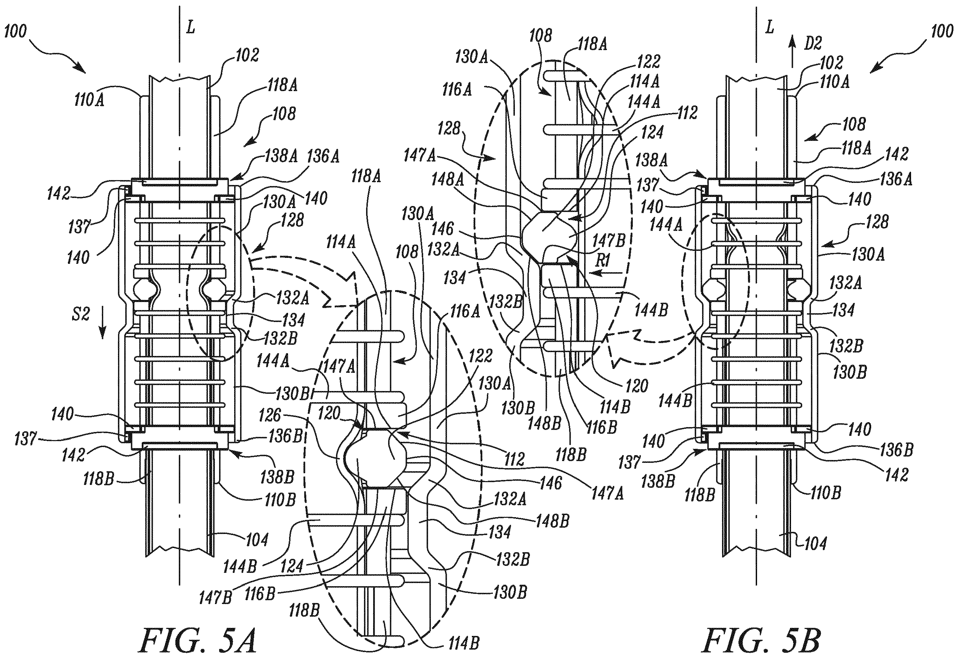

FIGS. **5A** and **5B** illustrate telescopic adjustment of the inner tube **102** in a second unlocked configuration of the coupling apparatus **100,** according to an embodiment of the present invention. As illustrated in FIG. **5A****,** in the second unlocked configuration, the sleeve **128** is slid towards the second end **110B** of the adapter **108** along the second sliding direction **S2** against the spring biasing of the first and the second spring members **144A, 144B.** The second sliding direction **S2** may be substantially parallel to a common longitudinal axis **L** of the coupling apparatus **100,** the inner tube **102** and the outer tube **104.** Thus, the retaining portion **134** of the sleeve **128** disengages from the horizontal surface **146** of the main portion **122** of the locking member **120.** Consequently, the inner tube **102** may be free to telescopically slide relative to the outer tube **104** in the second unlocked configuration of the coupling apparatus **100.** However, the locking members **120** may still remain within the locking recesses **126** of the inner tube **102** such that the first and the second vertical surfaces **147A, 147B** may abut the first and the second curved walls **114A, 114B,** respectively. As illustrated in FIG. **5B****,** the inner tube **102** is then slid along an outward direction **D2.** Therefore, the inner tube **102** is displaced along the outward direction **D2** relative to an initial position (as illustrated in FIG. **5A**) in which the locking recesses **126** may be aligned with the locking members **120.** The locking recesses **126** also move along the outward direction **D2** and are displaced relative to the locking members **120.** As a result, upwardly sloping portions of each of the locking recesses **126** may push the protruding portion **124** of the corresponding locking member **120** in a radial outward direction **R1.** Consequently, the first and the second vertical surfaces **147A, 147B** are displaced relative to the first and the second curved walls **114A, 114B,** respectively, in the radial outward direction **R1.** Finally, a cylindrical outer surface of the inner tube **102** contacts the protruding portions **124** of the locking members **120,** as shown in FIG. **5B****.** This may cause the locking members **120** to move further in the radial outward direction **R1** at least partially out of the recessed portions **112.** The first and the second vertical surfaces **147A, 147B** may therefore slide further in the radial outward direction **R1.** However, the first and the second vertical surfaces **147A, 147B** may continue to at least partially abut the first and the second curved walls **114A, 114B,** respectively. This may retain the locking members **120** longitudinally such that the locking members **120** may not slide along the second sliding direction **S2** with the sleeve **128.** Further, the first inclined portion **132A** of the sleeve **128** may abut the second slanted surface **148B** of each of the main portions **122.** This may retain the coupling apparatus **100** in the second unlocked configuration against the spring biasing of the first and the second spring members **144A, 144B.** Moreover, the horizontal surface **146** may at least partly abut an inner surface of the first wide portion **130A** of the sleeve **128.** This may restrict any further movement of the locking members **120** along the radial outward direction **R1.**

In an alternative embodiment, the locking members **120** are designed so that they may tend to move towards the radial outward direction **R1** unless forced by the retaining portion **134** to be inside the recessed portions **112** in the locked configuration (illustrated in FIGS. **4A** and **4B**). Thus, the locking members **120** may move along the radial outward direction **R1** at least partially out of the recessed portions **112** when the sleeve **128** disengages from the locking members **120** without any movement of the inner tube **102.**

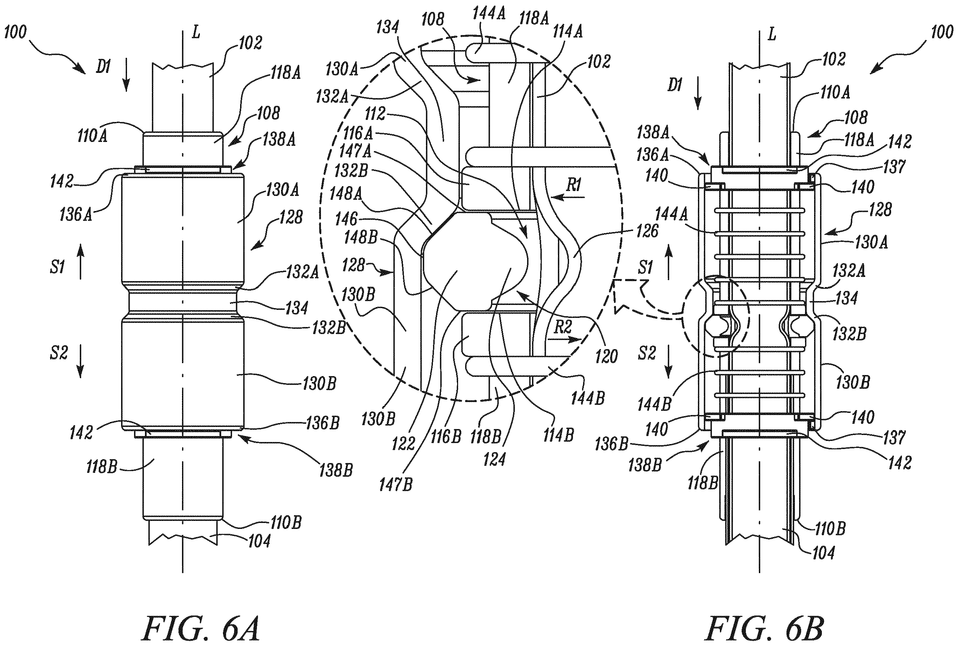

FIGS. **5A** and **5B** illustrate a telescopic adjustment of the inner tube **102** along the outward direction **D2.** However, the movement of the inner tube **102** along the inward direction **D1** may also be possible. It may be apparent that the telescopic adjustment of the inner tube **102** may also be possible after sliding the sleeve **128** along the first sliding direction **S1** to a first unlocked configuration (shown in FIGS. **6A** and **6B**).

FIGS. **6A** and **6B** illustrate the coupling apparatus **100** in a first unlocked configuration, according to an embodiment of the present invention. In the first unlocked configuration, the sleeve **128** is slid along the first sliding direction **S1** towards the first end **110A** of the adapter **108** against the spring biasing of the first and the second spring members **144A, 144B.** The first sliding direction **S1** may be substantially parallel to the longitudinal axis **L.** In an embodiment, the motion of the sleeve **128** along the first sliding direction **S1** may be restricted by the stop projections **142** of the first constraining member **138A.** Thus, the retaining portion **134** of the sleeve **128** disengages from the horizontal surface **146** of the main portion **122** of the locking member **120.** Consequently, the inner tube **102** may be free to telescopically slide relative to the outer tube **104** in the first unlocked configuration. Further, the locking members **120** move along a radial outward direction **R1** at least partly outside the recessed portions **112** due to engagement between the locking members **120,** and the upwardly sloping portions of the locking recesses **126** and the cylindrical outer surface of the inner tube **102** on telescopic movement of the inner tube **102.** The first and the second vertical surfaces **147A, 147B** may slide in the radial outward direction **R1** relative to the first and the second curved walls **114A, 114B,** respectively. However, the first and the second vertical surfaces **147A, 147B** may continue to at least partially abut the first and the second curved walls **114A, 114B,** respectively. This may retain the locking members **120** longitudinally such that the locking members **120** may not slide along the first sliding direction **S1** with the sleeve **128.** Further, the second inclined portion **132B** of the sleeve **128** may abut the first slanted surface **148A** of each of the main portions **122.** This may retain the coupling apparatus **100** in the first unlocked configuration against the spring biasing of the first and the second spring members **144A, 144B.** Moreover, the horizontal surface **146** may at least partly abut an inner surface of the second wide portion **130B** of the sleeve **128.** This may restrict any further movement of the locking members **120** along the radial outward direction **R1.** In an embodiment, the inner tube **102** may be slid into the outer tube **104** along an inward direction **D1** in the first unlocked configuration. The inward direction **D1** may be substantially opposite to the first sliding direction **S1.** However, in an alternative embodiment, the inner tube **102** may be slid out (not shown in FIGS. **6A** and **6B**) of the outer tube **104.**

In order to change the configuration of the coupling apparatus **100** from the first unlocked configuration to the locked configuration (as shown in FIGS. **4A** and **4B**), the sleeve **128** is slid along the second sliding direction **S2** towards the second end **110B** of the adapter **108.** The second sliding direction **S2** may therefore be substantially opposite to the first sliding direction **S1.** The retaining portion **134** may then engage with the horizontal surface **146** of each of the main portions **122.** The locked members **120** may consequently move along a radial inward direction **R2** inside the recessed portions **112.** Therefore, as illustrated in FIGS. **4A** and **4B****,** the protruding portions **124** of the locking members **120** detachably engages with the locking recesses **126** of the inner tube **102.** Thus, the coupling apparatus **100** may be in the locked configuration in which the inner tube **102** is telescopically locked relative to the outer tube **104.**

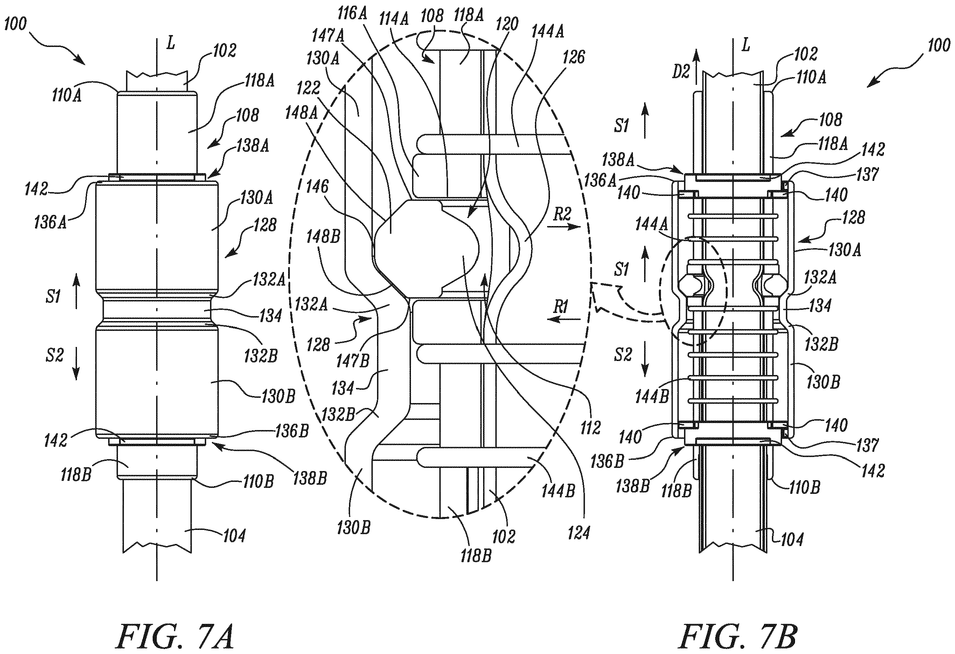

FIGS. **7A** and **7B** illustrate the coupling apparatus **100** in the second unlocked configuration before being changed to the locked configuration, according to an embodiment of the present invention. In order to change the configuration of the coupling apparatus **100** from the second unlocked configuration to the locked configuration (as shown in FIGS. **4A** and **4B**), the sleeve **128** is slid along the first sliding direction **S1** towards the first end **110A** of the adapter **108.** The retaining portion **134** may then engage with the horizontal surface **146** of each of the main portions **122.** The locked members **120** may then move along the radial inward direction **R2** inside the recessed portions **112.** Therefore, as illustrated in FIGS. **4A** and **4B****,** the protruding portions **124** of the locking members **120** detachably engage with the locking recesses **126** of the inner tube **102.** Thus, the coupling apparatus **100** may be in the locked configuration in which the inner tube **102** is telescopically locked relative to the outer tube **104.**

An exemplary operation of the coupling apparatus **100** will be now described. Initially, the coupling apparatus **100** may be in the locked configuration as described with reference to FIGS. **4A** and **4B****.** If a user may wish to telescopically adjust the inner tube **102** along the inward direction **D1** relative to the outer tube **104,** he may slide the sleeve **128** against biasing of the spring **144A** along the first sliding direction **S1** towards the first end **110A** of the adapter **108,** as illustrated in FIGS. **6A** and **6B****.** The user may then slide the inner tube **102** along the inward direction **D1** till a desired length is reached. At the desired length of the inner tube **102,** a set of the locking recesses **126** at the corresponding longitudinal position of the inner tube **102** may get aligned with the recessed portions **112** of the adapter **108.** Subsequently, the user may slide the sleeve **128** supported by biasing of the spring **144A** along the second sliding direction **S2** towards the second end **110B** of the adapter **108** such that the coupling apparatus **100** is in the locked configuration.

In another exemplary operation, a user may wish to adjust the inner tube **102** along the outward direction **D2** relative to the outer tube **104.** In such case, starting from the locked configuration of the coupling apparatus **100,** the user may slide the sleeve **128** against biasing of the spring **144B** along the sliding second direction **S2** towards the second end **110B** of the adapter **108,** as illustrated in FIG. **5A****.** The user may then slide the inner tube **102** along the outward direction **D2** (as illustrated in FIG. **5B**) till a desired length is reached. At the desired length of the inner tube **102,** a set of the locking recesses **126** at the corresponding longitudinal position of the inner tube **102** may get aligned with the recessed portions **112** of the adapter **108.** Subsequently, the user may slide the sleeve **128** supported by biasing of the spring **144B** along the first sliding direction **S1** towards the first end **110A** of the adapter **108** such that the coupling apparatus **100** is in the locked configuration.

It may be apparent to a person ordinarily skilled in the art, that the inner tube **102** may be telescopically adjusted along both the inward and the outward directions **D1, D2** by sliding the sleeve **128** either along the first sliding direction **S1** or along the second sliding direction **S2** from the locked configuration. The exemplary operations, as described above, may vary based on the preferences of the user. For example, based on his preference, the user may slide the sleeve **128** along the second sliding direction **S2** from the locked configuration if he wants to telescopically adjust the inner tube **102** along the inward direction **D1.** Similarly, based on his preference, the user may slide the sleeve **128** along the first sliding direction **S1** from the locked configuration if he wants to telescopically adjust the inner tube **102** along the outward direction **D2.**

The coupling apparatus **100** may be ergonomic since the inner tube **102** may be telescopically adjusted along both the inward and the outward directions **D1, D2** by sliding the sleeve **128** either along the first sliding direction **S1** or along the second sliding direction **S2** from the locked configuration. Thus, based on user preferences, the sleeve **128** may be slid along the first sliding direction **S1** from the locked configuration and the inner tube **102** slid along the inward direction **D1.** Since the inward direction **D1** may be substantially opposite to the first sliding direction **S1,** the operation may be intuitive and ergonomic for the user. Similarly, based on user preferences, the sleeve **128** may be slid along the second sliding direction **S2** from the locked configuration and the inner tube **102** slid along the outward direction **S2.** Since the outward direction **D2** may be substantially opposite to the second sliding direction **S2,** the operation may be intuitive and ergonomic for the user.

The first and the second curved walls **114A, 114B,** and the straight walls **115** may substantially prevent any longitudinal or circumferential movements, respectively, of the locking members **120** relative to the adapter **108.** Consequently, the locking members **120** may be substantially restricted to movements along the radial outward and the radial inward directions **R1, R2.** This may prevent any misalignment between the protruding portions **124** of the locking members **120,** and the locking recesses **126** of the inner tube **102.** Therefore, a user may easily change the configuration of the coupling apparatus **100** from the locked configuration to the first or the second unlocked configurations, and vice versa, without the locking members **120** getting misaligned.

Further, the first and the second vertical surfaces **147A, 147B** of the locking members **120** may continue to at least partially abut the first and the second curved walls **114A, 114B,** respectively, in the first and the second unlocked configurations of the coupling apparatus **100.** This may substantially prevent any movement of the locking members **120** along the radial inward direction **R2** and ensure that the protruding portions **124** of the locking members **120** may not detachably engage with one or more sets of the locking recesses **126** of the inner tube **102** before actuation of the sleeve **128** to the locked configuration on achieving a desired length of the inner tube **102.** This may further facilitate an easy sliding of the inner tube **102.**

The first and the second inclined portions **132A, 132B** of the sleeve **128** abut the second and the first slanted surfaces **148B, 148A** of the main portions **122** in the second and the first unlocked configurations, respectively, after the cylindrical outer surface of the inner tube **102** has pushed the locking members **120** at least partially out of the recessed portions **112,** as shown in FIGS. **5B** and **6B****.** This may retain the sleeve **128** in the first and the second unlocked configurations against the spring biasing of the first and the second spring members **144A, 144B.** Thus, a user may easily adjust the inner tube **102** without having to grasp the sleeve **128** continuously in position against the spring biasing of the first and the second spring members **144A, 144B.**

Further, the first and the second inclined portions **132A, 132B,** and/or the first and the second slanted surfaces **148A, 148B** may facilitate sliding of the sleeve **128** along the first and the second sliding directions **S1, S2.** For example, when the sleeve **128** is slid along the second sliding direction **S2** from the first unlocked configuration to the locked configuration, an inclined interface between the second inclined portion **132B** and the first slanted surface **148A** may result in a smooth and controlled relative movement between the sleeve **128** and the locking members **120.** Thus, any sudden movements may be substantially prevented. Consequently, damage to one or more components of the coupling apparatus **100** may be avoided. Further, a user experience may be improved.

The two constraining projections **140** of each of the first and the second constraining members **138A, 138B** may be annular segments extending over an angular range of approximately 90 degrees. Therefore, a circumferential gap of approximately 90 degrees may be present between each of the ends of the constraining projections **140.** Similarly, the stop projections **142** may be annular segments extending over an angular range of approximately 90 degrees. Further, the stop projections **142** may be angularly offset relative to the constraining projections **140** by approximately 90 degrees. Therefore, the stop projections **142** may be aligned with the circumferential gaps between the constraining projections **140.** Moreover, the end projections **137** of the sleeve **128** may be annular segments extending over an angular range of approximately 90 degrees. Further, a circumferential gap of approximately 90 degrees may be present between each of the ends of the end projections **137.** During assembly of the coupling apparatus **100,** the sleeve **128** may be angularly oriented relative to first and the second constraining members **138A, 138B** the such that the end projections **137** of the sleeve **128** are aligned with the circumferential gaps between the constraining projections **140.** Therefore, the sleeve **128** may be easily slid onto the first and the second constraining members **138A, 138B,** and then rotated such that the end projections **137** engage with the constraining projections **140.** During disassembly, the sleeve **128** may be rotated such that the end projections **137** disengage with the constraining projections **140,** and align with the circumferential gaps between the constraining projections **140.** The sleeve **128** may be then easily slid relative to the first and the second constraining members **138A, 138B.** During operation of the coupling apparatus **100,** the sleeve **128** may get accidentally rotated relative to the first and the second constraining members **138A, 138B** such that the end projections **137** may tend to align with the circumferential gaps between the constraining projections **140.** However, the stop projections **142,** that are angularly aligned with the circumferential gaps between the constraining projections **140,** may prevent the sleeve **128** from inadvertently disengaging from the first and the second constraining members **138A, 138B.** Thus, the sleeve **128** may be easily assembled and/or disassembled without interfering with an operation of the coupling apparatus **100.** Easy assembly and/or disassembly may facilitate maintenance, repair and/or replacement of one or more components of the coupling apparatus **100.**

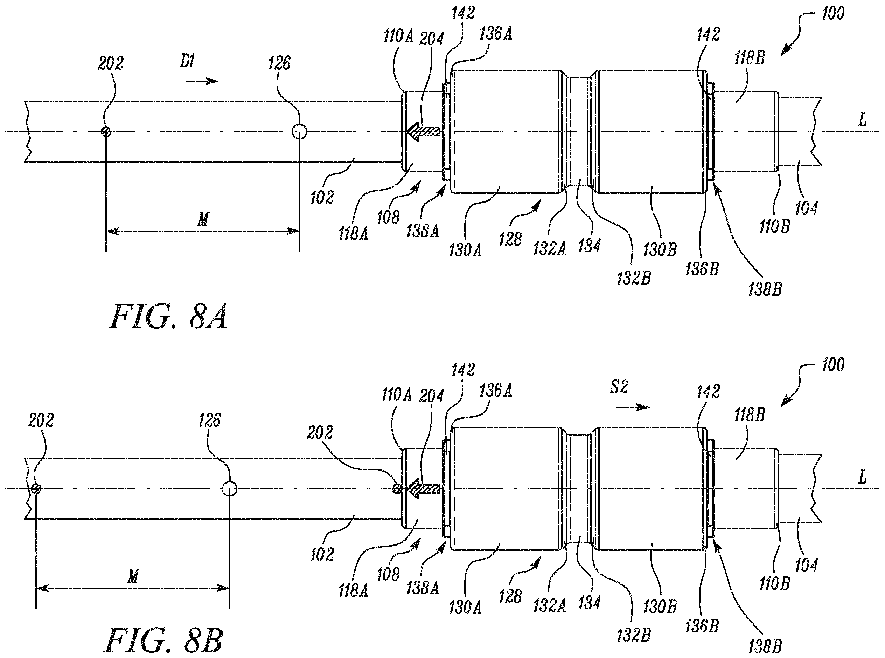

FIGS. **8A** and **8B** illustrate a telescopic adjustment of the inner tube **102** relative to the outer tube **104,** according to an embodiment of the present invention. As illustrated in FIG. **8B****,** the inner tube **102** includes multiple sets of tube indicators **202** and locking recesses **126.** Another locking recess **126** (as shown in FIG. **6B**) at the same longitudinal position may be located diametrically opposite to each of the locking recesses **126** shown in FIGS. **8A** and **8B****.** Each set of tube indicators **202** and locking recesses **126** may correspond to a particular longitudinal position of the inner tube **102** relative to the outer tube **104.** In an embodiment, each tube indicator **202** may be at a same angular position on the outer surface of the inner tube **102** as the corresponding locking recess **126.** Further, each tube indicator **202** and the corresponding locking recess **126** may be substantially located along the longitudinal axis **L.** In an embodiment, an axial distance **M** between one of the tube indicators **202** and the corresponding locking recess **126** may be substantially equal to a distance (not shown), along the longitudinal axis L, between the first end **110A** and one of the recessed portions **112.** Thus, the axial distance **M** may be approximately equal to half the length of the adapter **108.** As shown in FIGS. **8A** and **8B****,** the tube indicators **202** may be substantially circular. Further, the adapter **128** includes a reference indicator **204** proximate to the first end **110A.** In an embodiment, the reference indicator **204** may be at a same angular position on the outer surface of the adapter **108** as one of the recessed portions **112** (shown in FIG. **4B**) of the adapter **108**The reference indicator **204** and/or each tube indicator **202** may be a coloured marking, a raised or recessed portion, an etching, or the like. As shown in FIGS. **8A** and **8B****,** the reference indicator **204** may be in a shape of an arrow. However, a line (not shown), for example, may be used as a reference indicator. The tube indicators **202** and the reference indicator **204,** as shown in FIGS. **8A** and **8B****,** are purely exemplary in nature, and the tube indicators **202** and the reference indicator **204** may of any shape or dimensions within the scope of the present invention. In an embodiment, additional tube indicators (not shown) may be provided diametrically opposite to the tube indicators **202** shown in FIGS. **8A** and **8B****.** Further, another reference indicator (not shown) may be provided diametrically opposite to the reference indicator **204** shown in FIGS. **8A** and **8B****.**

As shown in FIG. **8A****,** in an example, the inner tube **102** may be slid relative to the outer tube **104** along the inward direction **D1.** When one of the tube indicators **202** may be substantially aligned with the reference indicator **204,** as shown in FIG. **8B****,** the corresponding locking recess **126** and the diametrically opposite locking recess **126** may be substantially aligned, both axially and circumferentially, with the corresponding recessed portions **112** of the adapter **108** (as shown in FIG. **7B**) due to the axial distance **M** between the tube indicator **202** and the corresponding locking recess **126,** and the same angular position of the reference indicator **204** and one of the recessed portions **112.** The sleeve **128** may be then slid along the second sliding direction **S2** such that the coupling apparatus **100** is in the locked configuration, as described with reference to FIGS. **7A** and **7B****.** Thus, a user may easily adjust and then lock the inner tube **102** relative to the outer tube **104** even when the recessed portions **112** and the locking recesses **126** are not visible from outside. Further, any circumferential misalignment between the recessed portions **112** and the locking recesses **126** due to rotation of the inner tube **102** during telescopic adjustment may be also easily rectified by aligning one of the tube indicators **202** and the reference indicator **204**

The coupling apparatus **100,** as described above, may therefore allow easy adjustment of a length of the extension handle that includes the inner tube **102** and the outer tube **104.** A user may adjust the length of the extension handle based on various needs. For example, the inner tube **102** may be slid into the outer tube **104** along the inward direction **D1** to decrease the length of the extension handle. Similarly, the inner tube **102** may be slid out of the outer tube **104** along the outward direction **D2** to increase the length of the extension handle.

In the drawings and specification, there have been disclosed preferred embodiments and examples of the invention and, although specific terms are employed, they are used in a generic and descriptive sense only and not for the purpose of limitation of the scope of the invention being set forth in the following claims.

### COUPLING APPARATUS FOR TELESCOPING TUBES

### Parts List:

100 Coupling Apparatus
102 Inner Tube
104 Outer Tube
108 Adapter
110A First End of the Adapter
110B Second End of the Adapter
112 Recessed Portions
114A First Curved Wall
114B Second Curved Wall
115 Straight Walls
116A First Projecting Portion
116B Second Projecting Portion
117 Partitions
118A First Portion of the Adapter
118B Second Portion of the Adapter
120 Locking Members
122 Main Portion of the Locking Member
124 Protruding Portion of the Locking Member
126 Locking Recesses of the Inner Tube
128 Sleeve
130A First Wide Portion of the Sleeve
130B Second Wide Portion of the Sleeve
132A First Inclined Portion of the Sleeve
132B Second Inclined Portion of the Sleeve
134 Retaining Portion
136A First End of the Sleeve
136B Second End of the Sleeve
137 End Projections of the Sleeve
138A First Constraining Member
138B Second Constraining Member
139 Base Portion
140 Constraining Projections
142 Stop Projections
144A First Spring Member
144B Second Spring Member
146 Horizontal Surface
147A First Vertical Surface
147B Second Vertical Surface
148A First Slanted Surface
148B Second Slanted Surface
150A Angle between the First Inclined Portion and the Retaining Portion
150B Angle between the Second Inclined Portion and the Retaining Portion
152A Angle between the First Slanted Surface and the Horizontal Surface
152B Angle between the Second Slanted Surface and the Horizontal Surface
202 Tube Indicators
204 Reference Indicator
L Longitudinal Axis
W1 Width of each of the First or Second Wide Portions
W2 Width of the Retaining Portion
S1 First Sliding Direction
S2 Second Sliding Direction
R1 Radial Outward Direction
R2 Radial Inward Direction
D1 Inward Direction
D2 Outward Direction
M Axial Distance between a locking recess and a corresponding tube indicator

## Claims

1. A coupling apparatus (**100**) for coupling an inner tube (**102**) and an outer tube (**104**), the inner tube being telescopically received within the outer tube, the coupling apparatus comprising:
an adapter (**108**) at least partly enclosing the inner tube and the outer tube, the adapter comprising a first end (**110A**), a second end (**110B**) and at least one recessed portion (**112**), the first end receiving the inner tube and the second end receiving the outer tube, the adapter being coupled to the outer tube;
a locking member (**120**) received within the at least one recessed portion of the adapter, the locking member being configured to detachably engage with the inner tube to lock the inner tube and outer tube relative to each other;
a sleeve (**128**) at least partly enclosing the adapter, the sleeve comprising a first end (**136A**), a second end (**136B**) and a retaining portion (**134**), the retaining portion being configured to detachably engage with the locking member to keep the locking member engaged with the inner tube; and
a first constraining member (**138A**) disposed on the adapter, the first constraining members being engaged with the first end of the sleeve;a second constraining (**138B**) member is disposed on the adapter, the second constraining member being engaged with the second end of the sleeve;
**characterized in that**
the first and the second constraining members (138A, 138B) are spring biased such that the retaining portion (134) of the sleeve (128) detachably engages with the locking member (120),
such that the sleeve (128) is slidable towards the first as well as towards the second ends of the adapter (108) against the spring biasing of the first and the second constraining members (138A, 138B) such that the retaining portion (134) of the sleeve (128) disengages from the locking member (120) and the locking member (120) disengages from the inner tube to allow the inner tube and the outer tube to telescopically slide relative to each other.

2. The coupling apparatus according to claim 1, wherein the adapter comprises two recessed portions (**112**), each recessed portion being configured to receive one locking member (**120**).

3. The coupling apparatus according to claim 2, wherein the locking member comprises a main portion (**122**) and a protruding portion (**124**), the main portion being configured to detachably engage with the retaining portion of the sleeve and the protruding portion being configured to detachably engage with a locking recess (**126**) of the inner tube.

4. The coupling apparatus according to claim 3, wherein the main portion is a substantially annular segment.

5. The coupling apparatus according to claims 1 or 2, wherein the locking member comprises a ball.

6. The coupling apparatus according to any of the preceding claims, wherein the sleeve further comprises at least one wide portion (**130A, 130B**), wherein a width (**W1**) of the at least one wide portion is more than a width (**W2**) of the retaining portion.

7. The coupling apparatus according to claim 6, wherein the sleeve further comprises at least one inclined portion (**132A, 132B**), the at least one inclined portion being disposed between the at least one wide portion and the retaining portion.

8. The coupling apparatus according to any of the preceding claims, wherein the sleeve further comprises at least one end projection (**137**) at each of the first and the second ends, and wherein each of the first and the second constraining members comprises at least one constraining projection (**140**), the at least one end projection at each of the first and second ends of the sleeve being configured to engage with the at least one constraining projection of each of the first and the second constraining members.

9. The coupling apparatus according to claim 8, wherein each of the first and the second constraining members further comprises at least one stop projection (**142**), the at least one stop projection being axially spaced relative to the at least one constraining projection.

10. The coupling apparatus according to claim 9, wherein the at least one constraining projection and the at least one stop projection are substantially annular segments.

11. The coupling apparatus according to any of the preceding claims further comprises a first spring member (**144A**) and a second spring member (**144B**), the first spring member being disposed between a first projecting portion (**116A**) of the adapter and the first constraining member, and the second spring member being disposed between a second projecting portion (**116B**) of the adapter and the second constraining member.

12. The coupling apparatus according to any of the preceding claims, wherein the inner tube comprises:
a plurality of locking recesses (**126**) spaced along a longitudinal axis (**L**);
a plurality of tube indicators (**202**) spaced along the longitudinal axis (**L**), each of the plurality of tube indicators corresponding to one of the plurality of locking recesses (**126**); and
wherein an axial distance (**M**) along the longitudinal axis (**L**) between one of the plurality of locking recesses (**126**) and the corresponding tube indicator (**202**) is substantially equal to the distance along the longitudinal axis (**L**) between the first end (**110A**) of the adapter (**108**) and the recessed portion (**112**) of the adapter (**108**).

13. The coupling apparatus according to claim 12, wherein an angular position of each of the tube indicators on an outer surface of the inner tube is substantially similar to an angular position of the corresponding locking recess on the outer surface of the inner tube.

14. The coupling apparatus according to claim 12 or 13, wherein the adapter further comprises a reference indicator (**204**) proximate to the first end of the adapter, and wherein the reference indicator is located at an angular position on an outer surface of the adapter substantially similar to an angular position of the tube indicators (**202**).

15. A hand-held tool comprising the coupling apparatus according to any of the preceding claims, wherein the inner tube and the outer tube are part of an extension handle of the hand-held tool.

## Patentansprüche

1. Kopplungsvorrichtung (100) zum Koppeln eines Innenrohres (102) und eines Außenrohres (104), wobei das Innenrohr innerhalb des Außenrohres teleskopisch aufgenommen wird, wobei die Kupplungsvorrichtung umfasst:
einen Adapter (108), der das Innenrohr und das Außenrohr zumindest teilweise umschließt, wobei der Adapter ein erstes Ende (110A), ein zweites Ende (110B) und mindestens einen vertieften Abschnitt (112) aufweist, wobei das erste Ende das Innenrohr und das zweite Ende das Außenrohr aufnimmt und der Adapter mit dem Außenrohr gekoppelt ist;
ein Verriegelungsglied (120), das in dem mindestens einen vertieften Abschnitt des Adapters aufgenommen ist, wobei das Verriegelungselement so gestaltet ist, dass es lösbar mit dem Innenrohr einrastet, um das Innenrohr und das Außenrohr relativ zueinander zu verriegeln;
eine Hülse (128), die den Adapter zumindest teilweise umschließt, wobei die Hülse ein erstes Ende (136A), ein zweites Ende (136B) und einen Halteabschnitt (134) aufweist, wobei der Halteabschnitt so gestaltet ist, dass er lösbar mit dem Verriegelungslied einrastet, um das Verriegelungselement mit dem Innenrohr eingerastet zu lassen; und
ein erstes Begrenzungselement (138A), das auf dem Adapter angeordnet ist, wobei das erste Begrenzungselement mit dem ersten Ende der Hülse einrastet; ein zweites Begrenzungselement (138B) auf dem Adapter angeordnet ist, wobei das zweite Begrenzungselement mit dem zweiten Ende der Hülse einrastet;
**dadurch gekennzeichnet, dass**
das erste und das zweite Begrenzungselement (138A, 138B) federvorgespannt sind, so dass der Halteabschnitt (134) der Hülse (128) lösbar mit dem Verriegelungsglied (120) einrastet;
so dass die Hülse (128) in Richtung des ersten wie auch des zweiten Endes des Adapters (108) gegen die Federvorspannung des ersten und des zweiten Begrenzungselements (138A, 138B) verschiebbar ist, so dass der Halteabschnitt (134) der Hülse (128) sich von dem Verriegelungsglied (120) löst und das Verriegelungsglied (120) sich von dem Innenrohr löst, um das Innenrohr und das Außenrohr teleskopartig relativ zueinander gleiten zu lassen.

2. Kopplungsvorrichtung gemäß Anspruch 1, wobei der Adapter zwei vertiefte Abschnitte (112) aufweist, wobei jeder vertiefte Abschnitt so konfiguriert ist, dass er ein Verriegelungsglied (120) aufnimmt.

3. Kopplungsvorrichtung gemäß Anspruch 2, wobei das Verriegelungselement einen Hauptabschnitt (122) und einen vorstehenden Abschnitt (124) umfasst, wobei der Hauptabschnitt so gestaltet ist, dass er lösbar mit dem Halteabschnitt der Hülse einrastet und der vorstehende Abschnitt so gestaltet ist, dass er lösbar mit der Verriegelungsvertiefung (126) des Innenrohrs einrastet.

4. Kupplungsvorrichtung gemäß Anspruch 3, wobei der Hauptabschnitt ein im Wesentlichen ringförmiges Segment ist.

5. Kupplungsvorrichtung gemäß Anspruch 1 oder 2, wobei das Verriegelungsglied eine Kugel aufweist.

6. Kopplungsvorrichtung gemäß einem der vorhergehenden Ansprüche, wobei die Hülse ferner mindestens einen breiten Abschnitt (130A, 130B) umfasst, wobei eine Breite (W1) des mindestens einen breiten Teils mehr als eine Breite (W2) des Halteteils ist.

7. Kopplungsvorrichtung gemäß Anspruch 6, wobei die Hülse ferner mindestens einen geneigten Abschnitt (132A, 132B) aufweist, wobei der mindestens eine geneigte Abschnitt zwischen dem mindestens einen breiten Abschnitt und dem Halteabschnitt angeordnet ist.

8. Kopplungsvorrichtung gemäß einem der vorhergehenden Ansprüche, wobei die Hülse ferner mindestens einen Endvorsprung (137) an jedem der ersten und zweiten Enden aufweist und wobei jedes der ersten und zweiten Begrenzungselemente mindestens einen Begrenzungsvorsprung (140) aufweist, wobei der mindestens eine Endvorsprung an jedem der ersten und zweiten Enden der Hülse so gestaltet ist, dass er mit dem mindestens einen Begrenzungsvorsprung von jedem der ersten und zweiten Begrenzungselemente einrastet.

9. Kopplungsvorrichtung gemäß Anspruch 8, wobei jedes der ersten und zweiten Begrenzungselemente ferner mindestens einen Anschlagvorsprung (142) umfasst, wobei der mindestens eine Anschlagvorsprung relativ zu dem mindestens einen Begrenzungsvorsprung axial beabstandet ist.

10. Kupplungsvorrichtung nach Anspruch 9, wobei der mindestens eine Begrenzungsvorsprung und der mindestens eine Anschlagvorsprung im Wesentlichen ringförmige Segmente sind.

11. Die Kupplungsvorrichtung gemäß einem der vorhergehenden Ansprüche umfasst ferner ein erstes Federelement (144A) und ein zweites Federelement (144B), wobei das erste Federelement zwischen einem ersten vorstehenden Abschnitt (116A) des Adapters und dem ersten Begrenzungselement angeordnet ist und das zweite Federelement zwischen einem zweiten vorstehenden Abschnitt (116B) des Adapters und dem zweiten Begrenzungselement angeordnet ist.

12. Kupplungsvorrichtung gemäß einem der vorhergehenden Ansprüche, wobei das Innenrohr umfasst:
eine Vielzahlt von Verriegelungsvertiefungen (126), die entlang einer Längsachse (L) beabstandet sind;
eine Vielzahl von Rohrindikatoren (202), die entlang der Längsachse (L) beabstandet sind, wobei jede der Vielzahl von Rohrindikatoren einer der Vielzahl von Verriegelungsvertiefungen (126) entspricht; und
wobei ein axialer Abstand (M) entlang der Längsachse (L) zwischen einer der Vielzahl von Verriegelungsvertiefungen (126) und dem entsprechenden Rohrindikator (202) im Wesentlichen gleich dem Abstand entlang der Längsachse (L) zwischen dem ersten Ende (110A) des Adapters (108) und des Vertiefungsabschnitts (112) des Adapters (108) ist.

13. Kopplungsvorrichtung gemäß Anspruch 12, wobei eine Winkelstellung jedes der Rohrindikatoren auf einer Außenfläche des Innenrohres im Wesentlichen einer Winkelposition der entsprechenden Verriegelungsvertiefung an der Außenfläche des Innenrohres entspricht.

14. Kopplungsvorrichtung gemäß Anspruch 12 oder 13, wobei der Adapter ferner einen Referenzindikator (204) nahe dem ersten Ende des Adapters aufweist, und wobei der Referenzindikator in einer Winkelposition auf einer Außenfläche des Adapters, die im Wesentlichen einer Winkelstellung der Rohrindikatoren (202) entspricht, angeordnet ist.

15. Handwerkzeug umfassend die Kupplungsvorrichtung gemäß einem der vorhergehenden Ansprüche, wobei das Innenrohr und das Außenrohr Teil eines Verlängerungsgriffes des Handwerkzeuges sind.

## Revendications

1. Appareil de couplage (100) pour coupler un tube intérieur (102) et un tube extérieur (104), le tube intérieur étant reçu de manière télescopique à l'intérieur du tube extérieur, l'appareil de couplage comprenant:
un adaptateur (108) entourant au moins partiellement le tube intérieur et le tube extérieur, l'adaptateur comprenant une première extrémité (110A), une seconde extrémité (110B) et au moins une partie en retrait (112), la première extrémité recevant le tube intérieur et la seconde extrémité recevant le tube extérieur, l'adaptateur étant couplé au tube extérieur;
un élément de verrouillage (120) reçu dans l'au moins une partie en retrait de l'adaptateur, l'élément de verrouillage étant configuré pour s'engager de manière amovible avec le tube intérieur pour verrouiller le tube intérieur et le tube extérieur l'un par rapport à l'autre;
un manchon (128) entourant au moins partiellement l'adaptateur, le manchon comprenant une première extrémité (136A), une seconde extrémité (136B) et une partie de retenue (134), la partie de retenue étant configurée pour s'engager de manière amovible avec l'élément de verrouillage pour conserver l'élément de verrouillage engagé avec le tube intérieur;
et un premier élément contraignant (138A) disposé sur l'adaptateur, le premier élément contraignant étant engagé avec la première extrémité du manchon; un second élément de contrainte (138B) est disposé sur l'adaptateur, le second élément contraignant étant engagé avec la seconde extrémité du manchon;
**caractérisé en ce que**
les premier et second éléments contraignants sont sollicités par ressort de telle sorte que la partie de retenue (134) du manchon (128) s'engage de manière amovible avec l'élément de verrouillage;
de telle sorte que le manchon peut glisser vers la première ou la seconde extrémité de l'adaptateur (108) contre la contraction du ressort des premier et second éléments contraignants de telle sorte que la partie de retenue (134) du manchon (128) se dégage de l'élément de verrouillage (120) et l'élément de verrouillage se dégage du tube intérieur permettant au tube intérieur et au tube extérieur de glisser télescopiquement l'un par rapport à l'autre.

2. Appareil de couplage selon la revendication 1, dans lequel l'adaptateur comprend deux parties en retrait (112), chaque partie en retrait étant configurée pour recevoir un élément de verrouillage (120).

3. Appareil de couplage selon la revendication 2, dans lequel l'élément de verrouillage comprend une partie principale (122) et une partie saillante (124), la partie principale étant configurée pour s'engager de manière amovible avec la partie de retenue du manchon et la partie saillante étant configurée pour s'engager de manière amovible avec un evidément de verrouillage (126) du tube intérieur.

4. Appareil de couplage selon la revendication 3, dans lequel la partie principale est un segment substantiellement annulaire.

5. Appareil de couplage selon la revendication 1 ou 2, dans lequel l'élément de verrouillage comprend une bille.

6. Appareil de couplage selon l'une des revendications précédentes, dans lequel le manchon comprend en outre au moins une partie large (130A, 130B), dans lequel une largeur (W1) de l'au moins une partie large est supérieure à une largeur (W2) de la partie de retenue.

7. Appareil de couplage selon la revendication 6, dans lequel le manchon comprend en outre au moins une partie inclinée (132A, 132B), l'au moins une partie inclinée étant disposée entre l'au moins une partie large et la partie de retenue.

8. Appareil de couplage selon l'une des revendications précédentes, dans lequel le manchon comprend en outre au moins une saillie d'extrémité (137) à chacune des première et seconde extrémités, et dans lequel chacun des premier et second éléments contraignants comprend au moins une saillie de contrainte (140), l'au moins une saillie d'extrémité à chacune des première et seconde extrémités du manchon étant configuré pour s'engager avec l'au moins une saillie de contrainte de chacun des premier et second éléments contraignants.

9. Appareil de couplage selon la revendication 8, dans lequel chacun des premier et second éléments contraignants comprend en outre au moins une saillie d'arrêt (142), l'au moins une saillie d'arrêt étant axialement espacée par rapport à l'au moins une saillie de contrainte.

10. Appareil de couplage selon la revendication 9, dans lequel l'au moins une saillie de contrainte et l'au moins une saillie d'arrêt sont des segments substantiellement annulaires.

11. L'appareil de couplage selon l'une des revendications précédentes comprend en outre un premier élément de ressort (144A) et un second élément de ressort (144B), le premier élément de ressort étant disposé entre une première partie en saillie (116A) de l'adaptateur et le premier élément contraignant et le second élément de ressort étant disposé entre une seconde partie en saillie (116B) de l'adaptateur et le second élément contraignant.

12. Appareil de couplage selon l'une des revendications précédentes, dans lequel le tube intérieur comprend:
une pluralité d'évidements de verrouillage (126) espacés le long d'un axe longitudinal (L);
une pluralité d'indicateurs de tube (202) espacés le long de l'axe longitudinal (L), chacun de la pluralité d'indicateurs de tube correspondant à l'un de la pluralité d'évidements de verrouillage (126); et
dans lequel une distance axiale (M) le long de l'axe longitudinal (L) entre l'un de la pluralité d'évidements de verrouillage (126) et l'indicateur de tube correspondant (202) est substantiellement égale à la distance le long de l'axe longitudinal (L) entre le premier extrémité (110A) de l'adaptateur (108) et la partie en retrait (112) de l'adaptateur (108).

13. Appareil de couplage selon la revendication 12, dans lequel une position angulaire de chacun des indicateurs de tube sur une surface extérieure du tube intérieur est substantiellement similaire à une position angulaire de l'évidement de verrouillage correspondant sur la surface extérieure du tube intérieur.

14. Appareil de couplage selon la revendication 12 ou 13, dans lequel l'adaptateur comprend en outre un indicateur de référence (204) à proximité de la première extrémité de l'adaptateur et dans lequel l'indicateur de référence est situé dans une position angulaire sur une surface extérieure de l'adaptateur substantiellement similaire à une position angulaire des indicateurs de tube (202).

15. Outil portatif comprenant l'appareil de couplage selon l'une des revendications précédentes, dans lequel le tube intérieur et le tube extérieur font partie d'une poignée d'extension de l'outil portatif.
